# EUROPÄISCHE PATENTSCHRIFT

(11) **EP 2 791 007 B1**
(45) Veröffentlichungstag und Bekanntmachung des Hinweises auf die Patenterteilung: **27.04.2016**
(21) Anmeldenummer: 12826524.6
(22) Anmeldetag: 03.12.2012
(51) Int. Cl.: H01M 8/06, H01M 8/04, H01M 8/12, H01M 8/10, B64D 13/06, F02C 9/18, B64D 41/00

(54) **LUFTFAHRZEUG MIT EINEM TRIEBWERK, EINEM BRENNSTOFFTANK UND EINER BRENNSTOFFZELLE**
AIRCRAFT HAVING AN ENGINE, A FUEL TANK, AND A FUEL CELL
AÉRONEF POURVU D'UN GROUPE PROPULSEUR, D'UN RÉSERVOIR À CARBURANT ET D'UNE PILE À COMBUSTIBLE

(30) Priorität: 16.12.2011 DE 102011121176
(43) Veröffentlichungstag der Anmeldung: 22.10.2014
(73) Patentinhaber: Airbus Defence and Space GmbH, 85521 Ottobrunn (DE)
(72) Erfinder: LIEW, Kan-Ern, B-2180 Antwerp (BE); STEINWANDEL, Jürgen, 88690 Uhldingen-Mühlhofen (DE)
(74) Vertreter: Kopf Westenberger Wachenhausen Patentanwälte PartG mbB
(86) Internationale Anmeldenummer: PCT/DE2012/001146
(87) Internationale Veröffentlichungsnummer: WO 2013/087051

(56) Entgegenhaltungen:
- EP-A2- 1 600 374
- EP-A2- 1 600 377
- DE-A1-102005 054 888
- US-A1- 2004 043 276
- US-A1- 2010 266 908

## Beschreibung

### TECHNISCHES GEBIET

Die vorliegende Erfindung betrifft ein Luftfahrzeug mit einem Triebwerk mit einem Verdichter und einer Zapflufteinrichtung, einem Brennstofftank und mindestens einer Brennstoffzelle.

### HINTERGRUND DER ERFINDUNG

Brennstoffzellensysteme ermöglichen es, emissionsarm und mit einem hohen Wirkungsgrad elektrischen Strom zu erzeugen. Daher gibt es gegenwärtig auch im Flugzeugbau Bestrebungen, Brennstoffzellensysteme zur Erzeugung der an Bord eines Flugzeugs benötigten elektrischen Energie heranzuziehen. Beispielsweise ist es denkbar, die derzeit zur Bordstromerzeugung eingesetzten, von Haupttrieb¬werken oder einer Hilfsturbine angetriebene Generatoren durch ein Brennstoffzellensystem zumindest teilweise zu ersetzen. Darüber hinaus können Brennstoffzellensysteme auch zur Notstromversorgung des Flugzeugs verwendet werden.

Dokument US2004/043276, welches als nächstliegender Stand der Technik angesehen wird, offenbart ein Luftfahrzeug mit einer Brennstoffzelle gemäß den Merkmalen des Oberbegriffes des Anspruchs 1.

Brennstoffzellen umfassen üblicherweise einen Kathodenbereich sowie einen durch einen Elektrolyt von dem Kathodenbereich getrennten Anodenbereich. Im Betrieb wird bei Brennstoffzellen mit einer Protonen-Austausch-Membran (auch als "Proton Exchange Membrane" oder "Polymer Electrolyte Membrane", PEM bekannt) der Anode der Brennstoffzelle ein Reduktionsmittel, üblicherweise Wasserstoff, und der Kathode der Brennstoffzelle ein Oxida¬tionsmittel, beispielsweise Luft, zugeführt. An der Anode wird der Wasserstoff katalytisch unter Abgabe von Elektronen zu Wasserstoffionen oxidiert. Diese gelangen durch den Elektrolyten in den Kathodenbereich, wo sie mit dem der Kathode zugeführten Sauerstoff sowie den über einen äußeren Stromkreis zur Kathode geleiteten Elektronen zu Wasser reagieren. PEM-Brennstoffzellen weisen Betriebstemperaturen von bis zu 100°C auf. Bei Festoxidbrennstoffzellen ("Solid Oxide Fuel Cell", SOFC) wird ein Elektrolyt aus einem festen keramischen Werkstoff verwendet, der in der Lage ist, negativ geladene Sauerstoffionen von der Kathode zu der Anode zu leiten, für Elektronen jedoch isolierend wirkt. Die elektrochemische Oxidation der Sauerstoffionen mit Wasserstoff oder Kohlenmonoxid findet daher an der Anodenseite statt. Die Betriebstemperatur von Festoxidbrennstoffzellen liegt in einem Bereich von 500-1000°C.

Der zum Betreiben einer Brennstoffzelle an Bord des Luftfahrzeugs eingesetzte Wasserstoff wird entweder direkt aus einem Tank bezogen oder indirekt in einem Reaktor, auch Reformer genannt, aus einem Brennstoff katalytisch erzeugt. Der in Luftfahrzeugen zur Erzeugung von Wasserstoff im Reforming-Prozess verwendete Brennstoff ist Kerosin. Kerosine sind Luftfahrtbetriebsstoffe unterschiedlicher Spezifikationen, die vorwiegend als Flugturbinenkraftstoffe verwendet werden. Kerosin wird den obersten Kolonnenböden des Mitteldestillats der Erdölrektifikation entnommen. Die Hauptbestandteile des Kerosins sind Alkane, Cycloalkane und aromatische Kohlenwasserstoffe mit etwa 8 bis 17 Kohlenstoffatomen pro Molekül. In der zivilen Luftfahrt wird fast ausschließlich ein Kerosin mit der Spezifikation Jet A-1 als Flugturbinenkraftstoff verwendet. Obwohl Kerosin ein enger Fraktionierschnitt aus dem leichten Mitteldestillat der Erdölraffination ist, handelt es sich hierbei immer noch um ein Gemisch von zahlreichen Kohlenwasserstoffen, wobei die Anzahl der im Gemisch enthaltenden Verbindungen durch die Zugabe von funktionalen Additiven zur Erreichung der jeweiligen Spezifikation noch erhöht wird.

Bei der katalytischen Erzeugung von Wasserstoff aus Kerosin kann sich aufgrund einer unvollständigen chemischen Umsetzung Koks auf der Oberfläche eines Katalysators in dem Reformer ansammeln. Bei diesem auch als Verkokung oder Vergiftung bezeichneten Vorgang wird die aktive Oberfläche des Reformer-Katalysators verringert, was zu einer Verkürzung der Lebensdauer des Reformers führt.

Die Betriebstemperatur von PEM-Brennstoffzellen ist aufgrund eines für die Ionenleitung notwendigen Wassergehalts in der Membran auf 100 °C begrenzt. Resultierend hieraus sind Katalysatoren notwendig, um eine ausreichende Reaktionsgeschwindigkeit der elektrochemischen Reaktion in der Brennstoffzelle sicherzustellen. Der stark saure Charakter der Membran erfordert den Einsatz von Edelmetallkatalysatoren wie Platin oder Platinlegierungen, mit denen die Membran beschichtet wird. Dies führt dazu, dass eine hohe Reinheit des Wasserstoff haltigen Brenngases gefordert wird. Insbesondere Kohlenmonoxid (CO) wird nur in sehr geringen Mengen toleriert, da es als Katalysatorgift wirkt und demnach die Lebensdauer der PEM-Brennstoffzelle deutlich reduziert.

### ZUSAMMENFASSUNG DER ERFINDUNG

Der vorliegenden Erfindung liegt die Aufgabe zugrunde, ein Luftfahrzeug vorzuschlagen, welches ein besonders haltbares und zuverlässiges Brennstoffzellensystem mit einem Reformer aufweist.

Diese Aufgabe wird durch ein Luftfahrzeug mit den Merkmalen des Anspruchs 1 gelöst. Vorteilhafte Weiterbildungen und Ausführungsformen sind den Unteransprüchen und der nachfolgenden Beschreibung zu entnehmen.

In einer vorteilhaften Ausführungsform der Erfindung weist ein Luftfahrzeug ein Triebwerk mit einem Verdichter und einer Zapflufteinrichtung zum Bereitstellen von Zapfluft aus dem Triebwerk auf, einen Brennstofftank für einen Brennstoff, mindestens eine Brennstoffzelle, einen Reaktor zum Reformieren von Brennstoff aus dem Brennstofftank zu einem Wasserstoff enthaltenden Brenngas, mindestens eine Zufuhreinheit mit einem Zapflufteingang, einem Brennstoffeingang, einem Oxidationsmittelausgang und einem Brennstoffausgang, wobei die Zufuhreinheit dazu eingerichtet ist, selektiv und nicht gleichzeitig ein Oxidationsmittel über den Oxidationsmittelausgang oder Brennstoff über den Brennstoffausgang in den Reaktor zu leiten, wobei die Zufuhreinheit mit der Zapflufteinrichtung verbunden ist und dazu eingerichtet ist, das Oxidationsmittel basierend auf Zapfluft bereitzustellen.

Das Triebwerk mit einem Verdichter und einer Zapflufteinrichtung kann ein Turboluftstrahltriebwerk sein, alternativ auch eine Turboprop-Maschine, wobei beide Triebwerksarten eine oder mehrere Verdichterstufen aufweisen. Im Stand der Technik ist es üblich, aus einer oder mehreren Verdichterstufen eines derartigen Triebwerks Luft mit einem relativ hohen Druck abzuzapfen, um etwa ein Klimatisierungssystem betreiben und gleichzeitig mit Luft versorgen zu können.

Die Brennstoffzelle kann als eine PEM-Brennstoffzelle ausgeführt sein, die von einem separaten Reaktor mit einem Wasserstoff enthaltenden Brenngas versorgt wird. Alternativ kann die Brennstoffzelle auch als eine Festoxidbrennstoffzelle (SOFC) realisiert sein, der ein Reaktor bzw. Reformer vorgeschaltet ist.

Grundsätzlich kann das Reformieren unter Verwendung eines Oxidationsmittels oder durch Dehydrierung erfolgen. Bei der Verwendung eines Oxidationsmittels entsteht Synthesegas, während sich bei der Dehydrierung ein Gemisch aus Wasserstoff und dehydriertem Restbrennstoff bildet. Nach Abtrennen des dehydrierten Restbrennstoffes und der Verunreinigungen wird der Brennstoffzelle entweder Synthesegas oder Wasserstoffgas zugeführt. Infolgedessen sollte bei Verwendung von Synthesegas eher eine Festoxidbrennstoffzelle eingesetzt werden, da das im Gas enthaltene Kohlenmonoxid den Katalysator einer Polymerelektrolytbrennstoffzelle vergiften würde. Eine Polymerelektrolytbrennstoffzelle sollte bevorzugt nur dann eingesetzt werden, wenn das Wasserstoff enthaltende Gas, das den Reaktor verlassen hat, mittels einer partiellen Dehydrierung des Brennstoffs erhalten wurde.

Die Zufuhreinheit zum Zuführen eines Oxidationsmittels zu dem Reaktor ist eine Einrichtung, die mit der Zapflufteinrichtung verbunden ist und somit Zapfluft aufnehmen kann. Das Oxidationsmittel, das aus der Zufuhreinheit abgegeben und dem Reaktor zugeführt wird, dient dazu, Ansammlungen von Verunreinigungen in Form von Koks oder Schwefel an einem Katalysator des Reformers durch Oxidation zu zu entfernen.

Durch das Entfernen von Ansammlungen an Katalysatoren eines Reformers kann wirkungsvoll dessen Lebensdauer gesteigert werden. Es ist verständlich, dass zum Verhindern unbeabsichtigter Reaktion mit dem zu reformierenden Brennstoff die Regeneration des Reformers nur in gewissen zeitlichen Abschnitten erfolgen kann, in denen der Reformer außer Betrieb gesetzt ist und ausschließlich von dem Oxidationsmittel durchströmt wird.

Eine vorteilhafte Ausführungsform weist ferner mindestens eine Abfuhreinheit mit einem Eingang, einem Brenngasausgang und einem Abgasausgang auf, wobei die Abfuhreinheit dazu eingerichtet ist, selektiv und nicht gleichzeitig Reaktionsprodukte aus dem Reaktor über den Brenngasausgang zu der Brennstoffzelle oder über den Auslass in die Umgebung des Luftfahrzeugs zu führen. Damit kann sichergestellt werden, dass insbesondere eine Polymerelektrolytbrennstoffzelle nicht mit heißen Abgasen aus einem Regenerationsprozess des Reaktors beaufschlagt wird und so beschädigt werden könnte.

In einer vorteilhaften Ausführungsform ist die Zapflufteinrichtung dazu eingerichtet, als Oxidationsmittel Zapfluft aus einem ersten Zapfluftanschluss des Triebwerks mit einer Temperatur von mindestens 250°C bereitzustellen. Da ein Triebwerk eines Luftfahrzeugs mehrere Verdichterstufen aufweisen kann, können unterschiedliche Zapfluftanschlüsse vorgesehen sein, aus denen verdichtete Luft mit unterschiedlichen Drücken und Temperaturen entnehmbar sind. Bei gängigen Turboluftstrahltriebwerken werden Zapfluftanschlüsse eingesetzt, die Zapfluft mit einer Temperatur zwischen 250°C und 650°C bereitstellen. Eine niedrige Temperatur, beispielsweise 250°C oder weniger, führt ebenfalls zur Abbrennung von Koks und Schwefel, wofür zwar ein größerer Zeitraum benötigt wird, dabei allerdings die Integrität der Katalysatoren geschützt bleibt.

In einer vorteilhaften Ausführungsform ist die Zapflufteinrichtung dazu eingerichtet, als Oxidationsmittel Zapfluft aus einem zweiten Zapfluftanschluss des Triebwerks mit einer Temperatur von mindestens 450°C bereitzustellen. Dies entspricht einem Zapftluftanschluss, der in einer höheren Verdichterstufe angeordnet ist und damit Luft mit einem höheren Druck und einer höheren Temperatur bereitstellt. Je höher die Temperatur ist, desto zügiger geht der Abbrennvorgang von Koks und Schwefel vonstatten, wobei die Verwendbarkeit dieser relativ hohen Temperatur davon abhängig ist, welche Art Reformer bzw. Katalysator eingesetzt wird. Es eignen sich prinzipiell folgende Katalysatoren bzw. Reformer: Pt und Pd-haltige Katalysatoren für die partielle Dehydrierung, sowie katalytische partielle Oxidation oder autotherme Dampfreformierung.

Allgemein kann die Zapftlufteinrichtung auch Zapfluftleitungen umfassen, die über Ventile mit mehreren Zapftluftanschlüssen verbunden sind und je nach Bedarf unterschiedliche Zapflufttemperaturen und -drücke bereitstellen. Bei Bedarf können auch verschiedene Zapfluftströme aus unterschiedlichen Zapfluftauslässen gemischt werden. Selbstverständlich ist denkbar, dass die Zapflufteinrichtung nicht nur einen einzigen Zapftluftausgang aufweist, sondern für verschiedene Anwendungszwecke auch mehrere Zapftluftausgänge besitzt. Dies könnte besonders vorteilhaft sein, um für die jeweiligen Temperaturen geeignete Leitungen bzw. Ventile einsetzen zu können.

In einer vorteilhaften Ausführungsform ist ein Ozongenerator vorgesehen, der aus einem eingehenden Zapfluftstrom Ozon erzeugt. Dieser könnte etwa auf einer dielektrischen Barriereentladung basieren. Das Beaufschlagen von verunreinigten Katalysatoren mit Ozon hat den Vorteil, dass die Regenerierung bei niedrigeren Temperaturen ausführbar ist und dabei die mechanischen Eigenschaften des Katalysators schützt. Dies betrifft sowohl PEM-Brennstoffzellen als auch SO-Brennstoffzellen, um Kohlenstoff bzw. Schwefel von Katalysatoroberflächen zu lösen. Ozon ist sehr viel reaktionsfreudiger als molekularer Sauerstoff, das zusätzliche Sauerstoffatom kann als eine Lewis-Base angesehen werden, die sich sehr leicht mit einer Lewis-Säure auf dem Katalysator bindet. Bei der beispielhaften Verwendung von Y-Al₂O₃ in einem Katalysator erfolgt eine chemische Reaktion von Ozon mit angelagertem Koks zur Bildung von CO₂:

Z-Al + O₃ → Z-AlO + O₂

Z-AlO + CₓH_{y} → Z-Al + CₓH_{y}O_{z}→ ... + Z-AlO→... CO₂ + H₂O + Z-Al.

In einer vorteilhaften Ausführungsform ist stromaufwärts des Zapftlufteingangs der Zufuhreinheit ein Zapftluftkühler zum Kühlen von Zapfluft angeordnet. Dies ist insbesondere dann sinnvoll, wenn ein Ozongenerator mit Zapfluft versorgt wird, der höhere Temperaturen nicht dauerhaft unbeschadet überstehen kann. Weiterhin ist für die Verwendung von Ozon kein hohes Temperaturniveau erforderlich, so dass etwa bereits vorgekühlte Zapfluft aus einem Klimaaggregat oder dergleichen für den Ozongenerator verwendbar ist, so dass der Zapfluftkühler eine integrale Komponente eines Klimaaggregats ist.

In einer vorteilhaften Ausführungsform weist die Zufuhreinheit mindestens ein Brennstoffventil und mindestens ein Oxidationsmittelventil auf. Mit dem Begriff des Oxidationsmittelventils ist nicht das Ventil direkt an einem Zapfluftanschluss anzusehen, sondern stellt eine unterbrechende Vorrichtung innerhalb der Zufuhreinheit dar, die ein Beaufschlagen eines Reaktors mit dem Oxidationsmittel Zapftluft herstellt oder unterbricht. Das Brennstoffventil ist dazu vorgesehen, den Brennstoffzufluss zu dem Reaktor zu unterbinden, wenn eine Regeneration mit dem Oxidationsmittel auf Zapfluftbasis durchgeführt wird.

In einer vorteilhaften Ausführungsform ist eine der mindestens einen Brennstoffzelle eine Polymerelektrolytbrennstoffzelle, die mit einem separaten Reaktor zum Bereitstellen eines Wasserstoff enthaltenden Brenngases verbindbar ist, wobei die Polymerelektrolytbrennstoffzelle einen Brenngaseingang aufweist, der über eine Brenngasleitung mit dem Brenngasausgang der Abfuhreinheit verbunden ist. Polymerelektrolytbrennstoffzellen werden üblicherweise mit einem Wasserstoff enthaltenden Brenngas und Sauerstoff versorgt, wobei ein vorgeschalteter Reaktor ein möglichst reines Wasserstoff enthaltendes Gas bereitstellt und als Abfallprodukt zumindest CO₂ an die Umgebung des Flugzeugs abgibt.

In einer vorteilhaften Ausführungsform weist die Brenngasleitung einen Lufteinlass zum Einleiten von Luft in die Brenngasleitung auf. Dies hat zur Folge, dass die Kohlenmonoxidtoleranz innerhalb der Brennstoffzelle gesteigert werden kann. Bei der Verwendung von Platin für einen Katalysator des Reformers führt dies zu folgender Reaktion:

Pt + CO → CO-Pt,

Pt + O₂ → O₂-Pt,

CO-Pt + O₂-Pt → CO₂ + 2Pt.

In einer vorteilhaften Ausführungsform ist der Lufteinlass mit einem Luftauslass eines Klimaaggregats eines Klimatisierungssystems verbunden. Dort wird bereits aufbereitete frische Luft zur Verfügung gestellt, die ein verträgliches Temperaturniveau aufweist und durch einen entsprechenden Druck sehr leicht in den Lufteinlass eingeleitet werden kann.

In einer vorteilhaften Ausführungsform ist ein Oxidationsmitteleingang der Brennstoffzelle mit einem Ausgang eines Ozongenerators verbunden. Der Brennstoffzelle wird damit Ozon zugeführt, so dass Kohlenmonoxid reduziert bzw. vollständig eliminiert wird und daher die Kohlenmonoxidtoleranz des Systems deutlich gesteigert wird.

In einer vorteilhaften Ausführungsform ist eine der mindestens einen Brennstoffzelle eine Festoxidbrennstoffzelle, die einen integrierten Reforming-Prozess ausführt. Die Beaufschlagung einer derartigen Brennstoffzelle mit molekularem Sauerstoff oder Ozon führt insbesondere zum Abbrennen von Koks und Schwefel unter Abgabe von CO₂ und Schwefeldioxid.

In einer vorteilhaften Ausführungsform ist der Festoxidbrennstoffzelle ein Reaktor in Form eines Pre-Reformers vorgeschaltet, auf den auch die vorangehend ausgeführten, auf externe Reformer bezogene Merkmale Einsatz finden können.

### KURZE BESCHREIBUNG DER ZEICHNUNGEN

Figur 1 zeigt im Detail das Brennstoffzellensystem eines Luftfahrzeugs in einem ersten Ausführungsbeispiel.
Figur 2 zeigt ein Brennstoffzellensystem eines Luftfahrzeugs in einem zweiten Ausführungsbeispiel.
Figuren 3 und 4 zeigen die Brennstoffzellensysteme aus den Figuren 1 und 2 mit Beschränkung auf die ausschließliche Verwendung von Festoxid-Brennstoffzellen.

### DETAILLIERTE DARSTELLUNG EXEMPLARISCHER AUSFÜHRUNGSFORMEN

Es wird ein Brennstoffzellensystem 2 gezeigt, welches eine Brennstoffzelle 4 aufweist, die eine PEM-Brennstoffzelle oder eine Festoxidbrennstoffzelle aufweist. Die Brennstoffzelle 4 weist einen Brenngaseingang 8 auf, der mit einem Brenngasausgang 10 eines Reaktors 12 verbindbar ist. Der Reaktor 12 wird mit Brennstoff aus einem Brennstoffeingang 14 versorgt und kann über eine katalytische Reaktion ein Wasserstoff enthaltendes Gas generieren. Als Abfallprodukt fällt unter anderem CO₂ an, welches über einen Abgasauslass 16 in die Umgebung des Flugzeugs geleitet wird. Der Reaktor 12 kann sowohl ein Reformer als auch ein Pre-Reformer für die Verwendung in Festoxid-Brennstoffzellen ausgeführt sein.

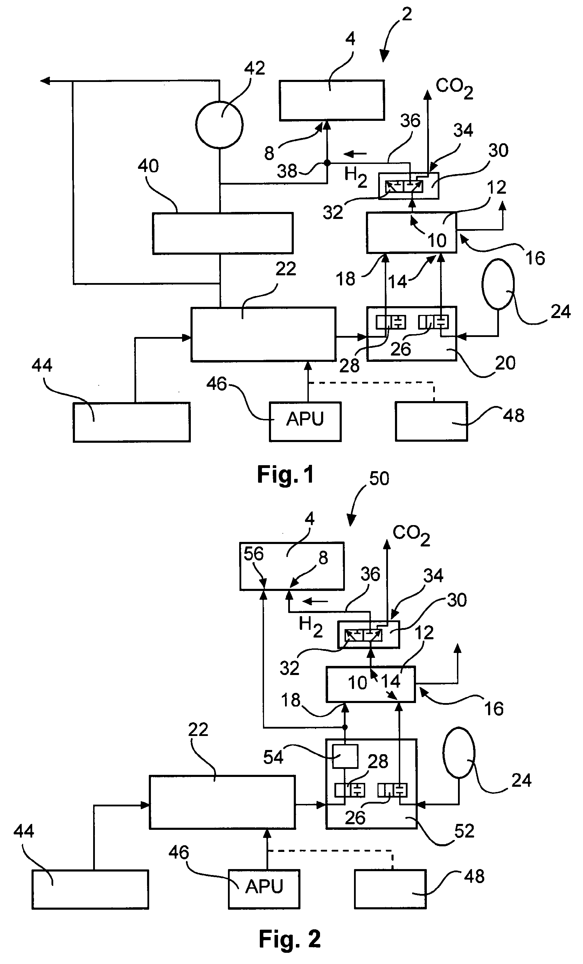

Bei der Erzeugung eines Wasserstoff enthaltenden Gases aus einem Brennstoff, beispielsweise Kerosin, besteht die Gefahr, dass Katalysatoren in dem Reformer Ansammlungen von insbesondere Koks bilden, die die Oberfläche bedecken und damit den Wirkungsgrad des Katalysators deutlich verringern. Aus diesem Grunde ist es besonders hilfreich, die Katalysatoren zu regenerieren. Dies kann durch Abbrennen der Ansammlungen erfolgen, wofür eine Unterbrechung des Betriebs des Reaktors 12 erforderlich ist, um durch Einleiten eines Oxidationsmittels über einen Oxidationsmitteleingang 18 die Rückstände abzubrennen. In dem in Fig. 1 dargestellten Ausführungsbeispiel wird als Oxidationsmittel heiße Luft verwendet, die sowohl einen ausreichenden Sauerstoffgehalt als auch eine ausreichende Temperatur im Bereich von etwa 450 °C bis 550 °C aufweist.

Die heiße Luft kann einer Zufuhreinheit 20 entnommen werden, die mit einer Zapflufteinrichtung 22 in Verbindung steht. Die Zufuhreinheit 20 steht ferner auch mit einem Brennstoffreservoir 24 in Verbindung. Die Zufuhreinheit 20 weist ein Brennstoffventil 26 und ein Oxidationsmittelventil 28 auf, durch die selektiv und nicht gleichzeitig Brennstoff oder ein Oxidationsmittel in den Reformer 12 geleitet werden kann. Die gleichzeitige Einleitung von Brennstoff und Oxidationsmittel ist aufgrund einer Explosionsgefahr zu verhindern.

Die Zufuhreinheit 20 könnte beispielsweise dazu eingerichtet sein, in bestimmten zeitlichen Intervallen eine automatische Regeneration des Reaktors 12 bereitzustellen, insbesondere dann, wenn temporär keine elektrische Leistung von der Brennstoffzelle 4 angefordert wird. Alternativ ist es auch denkbar, zwei identische Reaktoren 12 in dem Brennstoffzellensystem einzusetzen, die nacheinander regeneriert werden, so dass stets ein Reaktor 12 für die Bereitstellung eines Wasserstoff haltigen Gases eingesetzt werden kann.

Zum Schutz der Brennstoffzelle 4, insbesondere bei deren Ausführung als Polymerelektrolytbrennstoffzelle, ist erforderlich, bei der Regenerierung die enthaltenden Produkte nicht in die Brennstoffzelle 4 einzuleiten. Dies kann durch eine Abfuhreinheit 30 bewerkstelligt werden, die ein Ausgangsventil 32 aufweist, welches selektiv entweder einen Brenngaseingang 8 der Brennstoffzelle 4 oder einen Abgasauslass 34 mit dem Reaktor 12 verbindet.

In der gezeigten Darstellung in Fig. 1 sind die Ventile 26, 28 und 32 so geschaltet, dass eine Regeneration des Reaktors 12 durchgeführt wird. Brennstoff aus dem Brennstoffreservoir 24 wird durch das Brennstoffventil 26 gesperrt. Oxidationsmittel wird über das Oxidationsmittelventil 28 in den Reaktor 12 geleitet. Dort findet der Abbrennvorgang statt und die daraus entstehenden Produkte, hauptsächlich CO₂ und evtl. SO₂ werden über das Ausgangsventil 32 zu dem Abgasauslass 34 geleitet.

Die separate Darstellungen der Abfuhreinheit 30 und der Zufuhreinheit 20 sind nicht so zu verstehen, dass diese Komponenten unbedingt separat von einem Reaktor 12 vorzusehen sind. Vielmehr ist denkbar und sinnvoll, diese Komponenten direkt in den Reaktor 12 einzubinden, sofern dies bei Verwendung eines externen Reaktors möglich ist.

Polymerelektrolytbrennstoffzellen weisen eine relativ geringe Kohlenmonoxidtoleranz auf, so dass das Wasserstoff enthaltende Brenngas möglichst frei von Kohlenmonoxid sein sollte. Dies ist ausgehend von dem verwendeten Brennstoff allerdings nicht sehr leicht zu bewerkstelligen, so dass eine Brenngasleitung 36, die bei einem regulären Betrieb des Reformers 12 von einem Brenngasausgang 10 zu einem Brenngaseingang 8 der Brennstoffzelle 4 führt, ein Lufteinlass 38 integriert ist, in den beispielsweise molekularer Sauerstoff bzw. Luft geleitet wird. Dies führt in der Brennstoffzelle 4 zu einer chemischen Reaktion, die den Gehalt an Kohlenmonoxid reduziert. Die Toleranz der Brennstoffzelle 4 gegenüber in der Brenngasleitung 36 geleitetem Kohlenmonoxid kann damit deutlich gesteigert werden.

Zum Einleiten von molekularem Sauerstoff bzw. Luft in die Brenngasleitung 36 bietet es sich an, Luft aus einem Klimaaggregat 40 zu verwenden, bevor es eine Mischereinheit 42 erreicht, um dort mit rezirkulierter Luft vermischt zu werden. Das Klimaaggregat 40 ist in der Lage, aufbereitete und geeignet temperierte Luft mit einem ausreichenden Druck zum Einbringen aus einer Zapflufteinrichtung 22 in die Brenngasleitung 36 bereitzustellen.

Sollte die Regeneration des Reaktors 12 nicht während einer Flugphase erfolgen, könnte Zapfluft statt aus einem Flugzeugtriebwerk 44 auch aus einer APU 46 oder von einem Bodenanschluss 48 verwendet werden, wobei im letzteren Fall eine Zuheizung erforderlich ist.

Fig. 2 stellt ein abgewandeltes Brennstoffzellensystem 50 dar. Dort wird alternativ oder zusätzlich zu der ausschließlichen Verwendung von heißer Zapfluft als Oxidationsmittel in einer Zufuhreinheit 50 ein Ozongenerator 52 verwendet, der mit Zapfluft auf einem etwas niedrigeren Temperaturniveau versorgt wird und Ozon in den Reaktor 12 einleiten kann. Der Effekt des Abbrennens von Rückständen in einem Katalysator kann durch das reaktionsfreudigere Ozon deutlich gesteigert werden.

Weiterhin kann zur Erhöhung der Kohlenmonoxidtoleranz auch Ozon in die Brennstoffzelle 4 in einen separaten Eingang 54 eingeleitet werden, so dass das dort vorhandene oder eingeleitete Kohlenmonoxid zu Kohlendioxid umgewandelt wird.

Beim Einsatz von mehreren Brennstoffzellen 4 und Reaktoren 12 kann selbstverständlich eine Vermehrfachung der Zufuhreinheit 20 bzw. 52 und eine Vermehrfachung der Abfuhreinheit 30 durchgeführt werden, so dass sämtliche Brennstoffzellen 4 einzeln regenerierbar sind. Die Zufuhreinheiten 20 und 52 können auch derart modifiziert werden, dass sie selbst die Funktion mehrfacher Zufuhreinheiten und Abfuhreinheiten erfüllen können. Hierzu ist etwa eine entsprechende Anzahl von Ventilen notwendig. Es bietet sich ferner an, bei der Verwendung mehrerer Brennstoffzellen 4 und Reaktoren 12 eine Regel- oder Steuereinheit vorzusehen, die dazu eingerichtet ist, durch aufeinander abgestimmtes Ansteuern der Ventile die Reaktoren 12 nacheinander und nicht gleichzeitig zu regenerieren, so dass eine durchgängige Versorgung mit Elektrizität und anderen Produkten der Brennstoffzellen 4 ermöglicht wird, wenn auch mit etwas verminderter Leistung. Diese kann kurzzeitig durch einen Energiespeicher, etwa eine Batterie, kompensiert werden, alternativ auch durch Generatoren an einem Triebwerk 44.

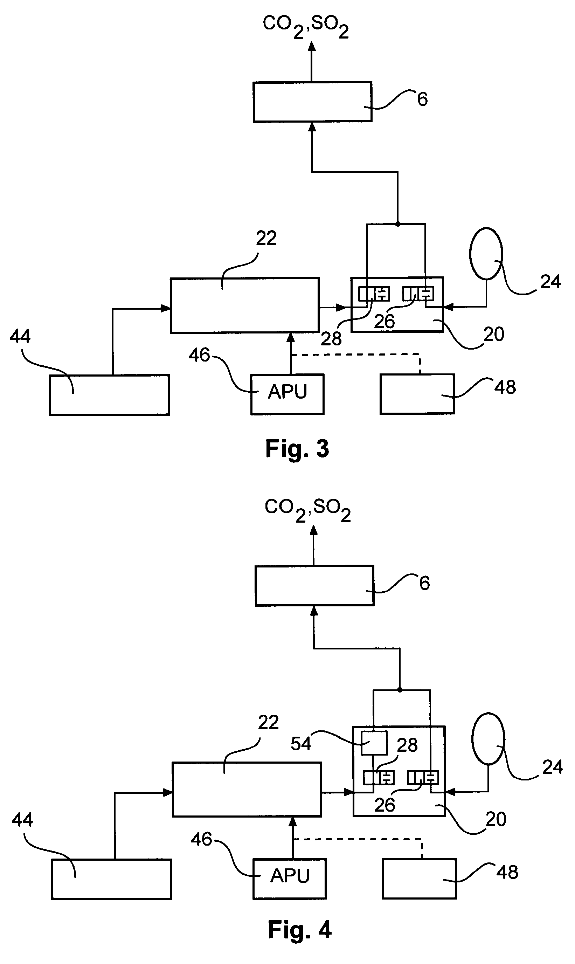

Fig. 3 und 4 demonstrieren den Aufbau der Brennstoffzellensysteme 2 und 50 für den Fall, dass die Brennstoffzelle 4 in Form einer Festoxidbrennstoffzelle 6 eingesetzt wird, die ausschließlich einen internen Reformerprozess ohne einen vorgeschalteten Reformer 12 durchführt. Die in der Festoxidbrennstoffzelle 6 angeordneten Katalysatoren sind dementsprechend selbst als Reformer bzw. Reaktoren anzusehen und sind ebenfalls der Ansammlung von Koks und Schwefel ausgesetzt. Der Aufbau kann sich etwas vereinfachen, da die Abfuhreinheit 30 nicht notwendig ist.

Die Brenstoffzufuhr und die Zufuhr des Oxidtionsmittels erfolgt, durch das Oxidationsmittelventil 28 und das Brennstoffventil 26 geschaltet, in den gleichen Eingang der Brennstoffzelle 6.

Gleichzeitig ist aufgrund der guten CO-Toileranz von Festoxid-Brennstoffzellen nicht mehr notwendig oder besonders vorteilhaft, zusätzlich Luft in eine Brenngasleitung einzuleiten, so dass der in Fig. 1 dargestellte Teil des Brennstoffzellensystems entfallen kann.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Luftfahrzeug, aufweisend:
- ein Triebwerk (44) mit einem Verdichter und einer Zapflufteinrichtung (22) zum Bereitstellen von Zapfluft aus dem Triebwerk (44),
- einen Brennstofftank (24) für einen Brennstoff,
- mindestens eine Brennstoffzelle (4, 6),
- einem Reaktor (12) zum Reformieren von Brennstoff aus dem Brennstofftank (24) zu einem Wasserstoff enthaltenden Brenngas, und
- mindestens eine Zufuhreinheit (20, 52) mit einem Zapflufteingang, einem Brennstoffeingang, einem Oxidationsmittelausgang und einem Brennstoffausgang,
wobei die Zufuhreinheit (20, 52) mit der Zapflufteinrichtung (22) verbunden ist und dazu eingerichtet ist, das Oxidationsmittel basierend auf Zapfluft bereitzustellen,
**dadurch gekennzeichnet, dass** die Zufuhreinheit (20, 52) dazu eingerichtet ist, selektiv und nicht gleichzeitig ein Oxidationsmittel über den Oxidationsmittelausgang oder Brennstoff über den Brennstoffausgang in den Reaktor (12) zu leiten.

2. Luftfahrzeug nach Anspruch 1, ferner aufweisend mindestens eine Abfuhreinheit (30) mit einem Eingang, einem Brenngasausgang und einem Abgasausgang (34), wobei die Abfuhreinheit (30) dazu eingerichtet ist, selektiv und nicht gleichzeitig Reaktionsprodukte aus dem Reaktor über den Brenngasausgang zu der Brennstoffzelle (12) oder über den Abgasausgang (34) in die Umgebung des Luftfahrzeugs zu führen,

3. Luftfahrzeug nach Anspruch 1 oder 2,
wobei die Zapflufteinrichtung (22) dazu eingerichtet ist, als Oxidationsmittel Zapfluft aus einem ersten Zapfluftanschluss des Triebwerks (44) mit einer Temperatur von mindestens 250 °C bereitzustellen.

4. Luftfahrzeug nach Anspruch 1 oder 2,
wobei die Zapflufteinrichtung (22) dazu eingerichtet ist, als Oxidationsmittel Zapfluft aus einem zweiten Zapfluftanschluss des Triebwerks (44) mit einer Temperatur von mindestens 450 °C bereitzustellen.

5. Luftfahrzeug nach einem der vorhergehenden Ansprüche,
wobei die Zufuhreinheit (52) einen Ozongenerator (54) aufweist, der mit dem Zapflufteingang und dem Oxidationsmittelausgang verbunden ist.

6. Luftfahrzeug nach Anspruch 5,
wobei stromaufwärts des Zapflufteingangs der Zufuhreinheit ein Zapfluftkühler zum Kühlen von Zapfluft angeordnet ist.

7. Luftfahrzeug nach einem der vorhergehenden Ansprüche,
wobei die Zufuhreinheit (20, 52) mindestens ein Brennstoffventil (26) und mindestens ein Oxidationsmittelventil (28) aufweist.

8. Luftfahrzeug nach einem der vorhergehenden Ansprüche,
wobei eine der mindestens einen Brennstoffzelle (4) eine Polymerelektrolytbrennstoffzelle ist, die mit einem separaten Reaktor (12) zum Bereitstellen eines Wasserstoff enthaltenden Brenngases verbindbar ist, wobei die Polymerelektrolytbrennstoffzelle einen Brenngaseingang aufweist, der über eine Brenngasleitung (36) mit dem Brenngasausgang der Abfuhreinheit (30) verbunden ist.

9. Luftfahrzeug nach Anspruch 8,
wobei die Brenngasleitung (36) einen Lufteinlass (38) zum Einleiten von Luft in die Brenngasleitung (36) aufweist.

10. Luftfahrzeug nach Anspruch 9,
wobei der Lufteinlass (38) mit einem Luftauslass eines Klimaaggregats (40) eines Klimatisierungssystems verbunden ist.

11. Luftfahrzeug nach Anspruch 8,
wobei ein Oxidationsmitteleingang der Brennstoffzelle (4) mit einem Ausgang eines Ozongenerators (54) verbindbar ist.

12. Luftfahrzeug nach einem der vorhergehenden Ansprüche,
wobei eine der mindestens einen Brennstoffzelle eine FestoxidBrennstoffzelle (6) ist, die dazu eingerichtet ist, einen integrierten Reforming-Prozess auszuführen.

13. Luftfahrzeug nach Anspruch 12, wobei der Festoxid-Brennstoffzelle (6) ein Reaktor (12) in Form eines Pre-Reformers vorgeschaltet ist.

## Claims

1. Aircraft, comprising:
- an engine (44) having a compressor and a bleed air device (22) for providing bleed air from the engine (44),
- a fuel tank (24) for a fuel,
- at least one fuel cell (4, 6),
- a reactor (12) for reforming fuel from the fuel tank (24) into a fuel gas containing hydrogen, and
- at least one supply unit (20, 52) having a bleed air input, a fuel input, an oxidant output and a fuel output,
the supply unit (20, 52) being connected to the bleed air device (22) and being set up to provide the oxidant on the basis of bleed air,
**characterised in that** the supply unit (20, 52) is set up to guide an oxidant via the oxidant output or fuel via the fuel output into the reactor (12), selectively and non-simultaneously.

2. Aircraft according to claim 1, further comprising at least one removal unit (30) having an input, a fuel gas output and an exhaust gas output (34), the removal unit (30) being set up to guide reaction products from the reactor via the fuel gas output to the fuel cell (12) or via the exhaust gas output (34) into the environment, selectively and non-simultaneously.

3. Aircraft according to either claim 1 or claim 2,
wherein the bleed air device (22) is set up to supply bleed air from a first bleed air connector of the engine (44) at a temperature of at least 250 °C as an oxidant.

4. Aircraft according to either claim 1 or claim 2,
wherein the bleed air device (22) is set up to provide bleed air from a second bleed air connector of the engine (44) at a temperature of at least 450 °C as an oxidant.

5. Aircraft according to any of the preceding claims,
wherein the supply unit (52) comprises an ozone generator (54) which is connected to the bleed air input and the oxidant output.

6. Aircraft according to claim 5,
wherein a bleed air cooler for cooling bleed air is arranged upstream from the bleed air input of the bleed air unit.

7. Aircraft according to any of the preceding claims,
wherein the supply unit (20, 52) comprises at least one fuel valve (26) and at least one oxidant valve (28).

8. Aircraft according to any of the preceding claims,
wherein one of the at least one fuel cell (4) is a polymer electrolyte fuel cell, which is connectable to a separate reactor (12) to provide a fuel gas containing hydrogen, the polymer electrolyte fuel cell having a fuel gas input which is connected via a fuel gas line (36) to the fuel gas output of the removal unit (30).

9. Aircraft according to claim 8,
wherein the fuel gas line (36) comprises an air inlet (38) for introducing air into the fuel gas line (36).

10. Aircraft according to claim 9,
wherein the air inlet (38) is connected to an air outlet of an air-conditioning unit (40) of an air-conditioning system.

11. Aircraft according to claim 8,
wherein an oxidant input of the fuel cell (4) is connectable to an output of an ozone generator (54).

12. Aircraft according to any of the preceding claims,
wherein one of the at least one fuel cell is a solid oxide fuel cell (6), which is set up to carry out an integrated reforming process.

13. Aircraft according to claim 12, wherein a reactor (12) in the form of a pre-reformer is connected upstream from the solid oxide fuel cell (6).

## Revendications

1. Aéronef, présentant :
- un groupe propulseur (44) comportant un compresseur et un moyen de prélèvement d'air (22) pour fournir de l'air de prélèvement depuis le groupe propulseur (44),
- un réservoir à carburant (24) pour un carburant,
- au moins une pile à combustible (4, 6),
- un réacteur (12) destiné au reformage de carburant provenant du réservoir à carburant (24) pour obtenir un carburant gazeux contenant de l'hydrogène, et
- au moins une unité d'alimentation (20, 52) pourvue d'une entrée d'air de prélèvement, d'une entrée de carburant, d'une sortie d'oxydant et d'une sortie de carburant,
dans lequel l'unité d'alimentation (20, 52) est reliée au dispositif de prélèvement d'air (22) et est adaptée pour fournir l'oxydant à base d'air de prélèvement,
**caractérisé en ce que** l'unité d'alimentation (52) est adaptée pour acheminer dans le réacteur (12), sélectivement et non simultanément, un oxydant par l'intermédiaire de la sortie d'oxydant, ou du carburant par l'intermédiaire de la sortie de carburant.

2. Aéronef selon la revendication 1, présentant en outre au moins une unité d'évacuation (30) avec une entrée, une sortie de carburant et une sortie de gaz d'échappement (34), dans lequel l'unité d'évacuation (30) est adaptée pour amener, sélectivement et non simultanément, des produits de réaction depuis le réacteur par l'intermédiaire de la sortie de carburant jusqu'à la pile à combustible (12) ou par l'intermédiaire de la sortie de gaz d'échappement (34) dans l'environnement de l'aéronef.

3. Aéronef selon la revendication 1 ou 2,
dans lequel le moyen de prélèvement d'air (22) est adapté pour fournir, en tant qu'oxydant, de l'air de prélèvement depuis un premier branchement d'air de prélèvement du groupe propulseur (44) à une température d'au moins 250 °C.

4. Aéronef selon la revendication 1 ou 2,
dans lequel le moyen de prélèvement d'air (22) est adapté pour fournir, en tant qu'oxydant, de l'air de prélèvement depuis un second branchement d'air de prélèvement du groupe propulseur (44) à une température d'au moins 450 °C.

5. Aéronef selon l'une des revendications précédentes,
dans lequel l'unité d'alimentation (52) présente un générateur d'ozone (54), qui est relié à l'entrée d'air de prélèvement et à la sortie d'oxydant.

6. Aéronef selon la revendication 5,
dans lequel un refroidisseur d'air de prélèvement est disposé en amont de l'entrée d'air de prélèvement de l'unité d'alimentation pour refroidir l'air de prélèvement.

7. Aéronef selon l'une des revendications précédentes,
dans lequel l'unité d'alimentation (20, 52) présente au moins une vanne de carburant (26) et au moins une vanne d'oxydant (28).

8. Aéronef selon l'une des revendications précédentes,
dans lequel une des au moins une pile à combustible (4) est une pile à combustible électrolyte polymère, qui peut être reliée à un réacteur (12) séparé pour fournir un carburant gazeux contenant de l'hydrogène, la pile à combustible électrolyte polymère présentant une entrée de carburant gazeux, qui est reliée par l'intermédiaire d'une conduite de carburant gazeux (36) à la sortie de carburant gazeux de l'unité d'évacuation (30).

9. Aéronef selon la revendication 8,
dans lequel la conduite de carburant gazeux (36) présente une admission d'air (38) pour introduire de l'air dans la conduite de carburant gazeux (36).

10. Aéronef selon la revendication 9,
dans lequel l'admission d'air (38) est reliée à une sortie d'air d'un climatiseur (40) d'un système de climatisation.

11. Aéronef selon la revendication 8,
dans lequel une entrée d'oxydant de la pile à combustible (4) peut être reliée à une sortie d'un générateur d'ozone (54).

12. Aéronef selon l'une des revendications précédentes,
dans lequel une des au moins une pile à combustible est une pile à combustible à oxyde solide (6), étant adaptée pour réaliser un processus de reformage intégré.

13. Aéronef selon la revendication 12,
dans lequel un réacteur (12) sous la forme d'un pré-reformeur est placé en amont de la pile à combustible à oxyde solide (6).
